# EUROPEAN PATENT APPLICATION

(11) **EP 1 215 892 A1**
(43) Date of publication of application: **19.06.2002**
(21) Application number: 00311327.1
(22) Date of filing: 18.12.2000
(51) Int. Cl.: H04N 5/222

(54) **Television transmission system**

(71) Applicant: BRITISH TELECOMMUNICATIONS public limited company, London EC1A 7AJ (GB)
(72) Inventor: The designation of the inventor has not yet been filed
(74) Representative: Lloyd, Barry George William

(57) **Abstract**

A camera at a first site such as a remote interview studio 4 sends television signals via a mixer 6 to a broadcast transmitter 8. A camera 5 at a second location such as a central television studio 2 also sends television signals to the mixer 6. The signals are coded (at 29 and 7) using digital compression techniques which however cause significant delay and render usatisfactory the conventional technique of using off-air signals from the transmitter 8 to provide a display at the remote studio of an interviewer 1 at the central studio, and of using the signals from the coder 29 to provide a display at the central studio of an interviewee 3 at the remote studio 4. Therefore each site 4, 2 has a further coder and decoder 24, 23 connected by a link 22 to the further coder and decoder 23, 24 of the other site and connected respectively to receive the output of the site's camera 10, 5 and to feed a decoded output to the site's monitor 26,13. These coders use a coding scheme of lower picture quality and lower delay.

## Description

This invention is concerned with television transmission.

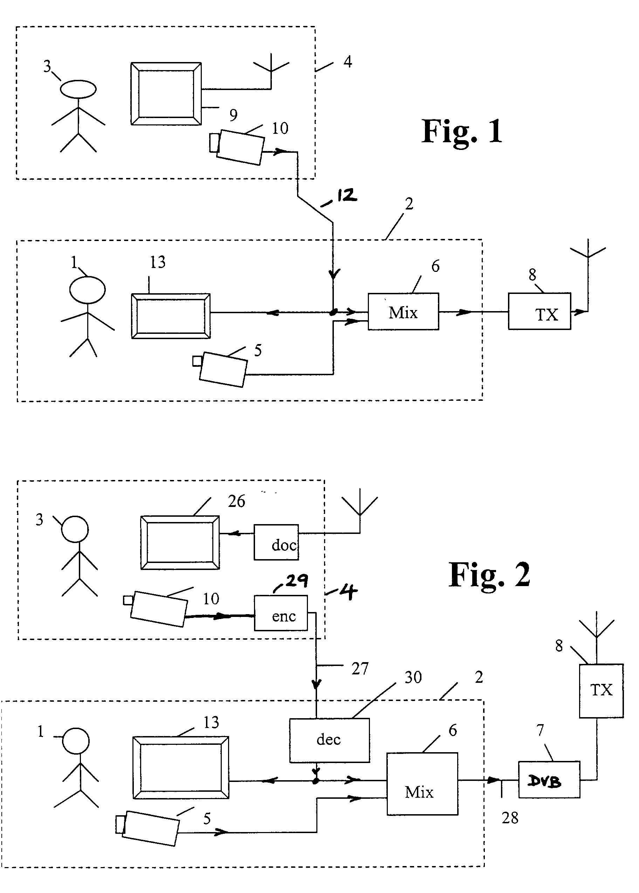

It is common in television broadcasting, for example for news or current affairs programmes, for an interviewer to interview a person at a remote site. This situation is depicted in Figure 1 where an interviewer 1 at a television centre 2 is to interview an interviewee 3 at a remote television studio 4. At the television centre 2, a camera 5 transmits pictures of the interviewer 1 via a vision mixer 6 to a broadcast transmitter 8 (usually at a third location).

At the remote studio 4, a television receiver 9 receives off-air pictures from the transmitter 8 so that the interviewee can see the interviewer 1, whilst pictures of the interviewee are supplied by a camera 10 via a link 12 to feed at the television centre the vision mixer 6 and a video monitor 13 so that the interviewer can see a picture of the interviewee. Audio signals (not explicitly shown) follow the same paths.

Although such arrangements have proved satisfactory in the past, a problem has arisen with the introduction of digital compression techniques for broadcast television, both terrestrial and satellite. Such coders aim to provide high picture quality and, of course a high degree of compression, but cause considerable signal delay: typically a digital coder would be used between the mixer 6 and the transmitter 8 in Figure 1 for transmission according to the DVB standard (see ETSI document TR 101 200 "Guideline for the use of DVB specifications and standards"). Such a coder might have a delay of several seconds. Although this is not normally a problem for broadcasting, naturally it is highly unsatisfactory for the interviewer and interviewee.

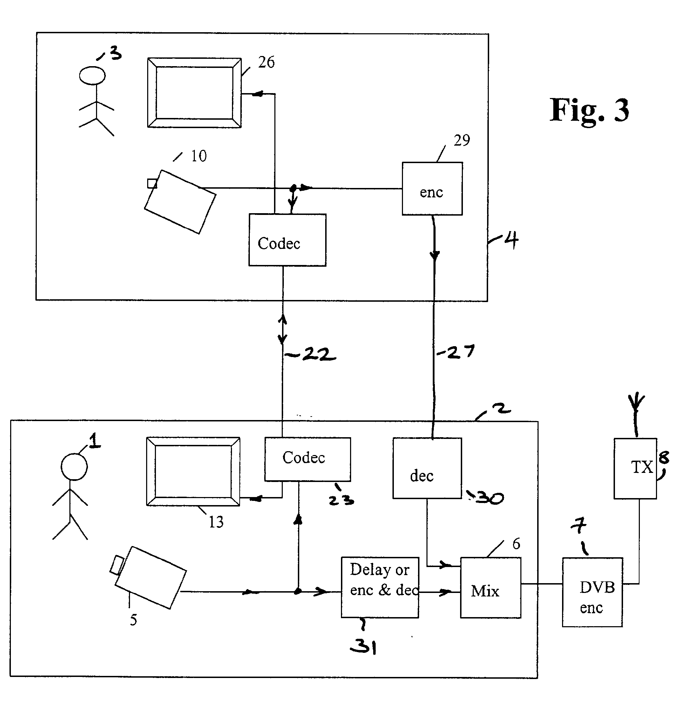

Other links in the system depicted in Figure 1 may be converted to digital links using compression coders and decoders, saving bandwidth but introducing further delay into the chain. This new situation, where the links have been converted to digital operation using compression codecs, is illustrated in Figure 2, where items 1 to 6 and 8 to 10 are again shown.

Here, however, signals from the vision mixer 6 are sent via a link 28 (which may be analogue, low-delay digital or high-delay digital), and via the high-delay DVB coder 7 to the broadcast transmitter 8.

At the remote studio 4, pictures of the interviewee are supplied by the camera 10 via a coder 29, contribution link 27 and decoder 30 to feed at the television centre the vision mixer 6 and the video monitor 13 so that the interviewer can see a picture of the interviewee. Audio signals (not explicitly shown) may follow the same paths, though it is common for echo-cancelling equipment to be installed.

An interview scenario based upon the technology illustrated in Figure 2 has inherent delay which means that the interviewer 1 needs to wait a time which is of the order of 5 seconds for a response from the interviewee 3, negating the possibility of conversational flow and normal interjections. Similarly, the interviewee needs to wait approximately 5 seconds before he can receive another question from interviewer 1.

According to the present invention there is provided a television transmission system comprising:
a first site with a first monitor and a first camera;
a second site, remote from the first, with a second monitor and a second camera;
mixing means for mixing television signals from the first and second sites and forwarding them to a transmitter; and
first coding means for coding television signals from the first and second sites prior to receipt by the transmitter;
wherein each site has a further coder and decoder connected by a link to the further coder and decoder of the other site and connected respectively to receive the output of the site's camera and to feed a decoded output to the site's monitor; and
wherein the further coders and decoders are arranged to operate at a lower quality and lower signal delay than said first coding means.

In another aspect the invention provides television system comprising:
a) a first station having a camera, a first coder for coding television signals from the camera and a second coder for coding television signals from the camera;
b) a second station having a decoder, a monitor for displaying pictures decoded by the decoder and means for transmitting signals to the first station for interaction therewith;
c) means for conveying signals from the first coder at the first station to the second station; and
d) means for conveying signals from the second coder at the first station to a third station;
wherein the first coder and the decoder are arranged to operate at a lower quality and lower signal delay than is the second coder.

Some embodiments of the present invention will now be described, by way of example, with reference to the accompanying drawings, in which:
Figure 1 and Figure 2 are block diagrams of the known system described above;
Figure 3 is a block diagram of a television transmission system embodying the invention; and
Figure 4 is a block diagram of a further embodiment of the invention.

In Figure 3, the interviewer 1 at the television centre 2 and the interviewee 3 at the remote studio 4 are again shown, as also is the monitor 13, the cameras 5, 10 and the mixer 6 and transmitter 8. The coder 29, the high-quality, high-delay contribution link 27 and decoder 30 of Figure 2 are also shown. In addition, a delay unit 31 is also shown (between the camera 5 and mixer 6), whose function is to match the delay provided by encoder 29 and decoder 30. In cases where the mixer 6 is able to accept compressed video as inputs, then decoder 30 can be eliminated and the delay unit 31 can be replaced by an encoder unit similar to encoder 29.

The interviewer and interviewee are now in the same time-zone, relative to the radiated television output signal. To benefit from this, in the interview scenario, an additional link 22 is provided. A codec (coder/decoder) 23 codes video signals from the camera 5 at the television centre 2 using a low delay, low quality coding algorithm and forwards these signals over the link 22 to a similar codec 24 at the remote studio 4 where they are decoded and fed to a monitor 25 . In the opposite direction, video signals from the camera 10 are coded by the codec 24 and sent over the link 22 to the codec 23 where they are decoded and displayed on the monitor 13.

It should be understood that the coders 7 and 29 are coders providing a high picture quality and a high delay, whilst the codecs 23, 24 provide a lower delay, but inevitably a lower picture quality.

Suitable coders and decoders that might be used are
- for coder 7, a coder operating in accordance with the DVB standard at typically 4 to 5 Mbit/s;
- for coder 29 (and that replacing the delay 31, if used) and decoder 30, a coder and decoder operating in accordance with the ISO MPEG2 standard, operating at at least 7.5 Mbit/s.
- for the codecs 23, 24, a codec operating in accordance with the ITU H.261 standard, at a bit rate of up to 1 Mbit/s.

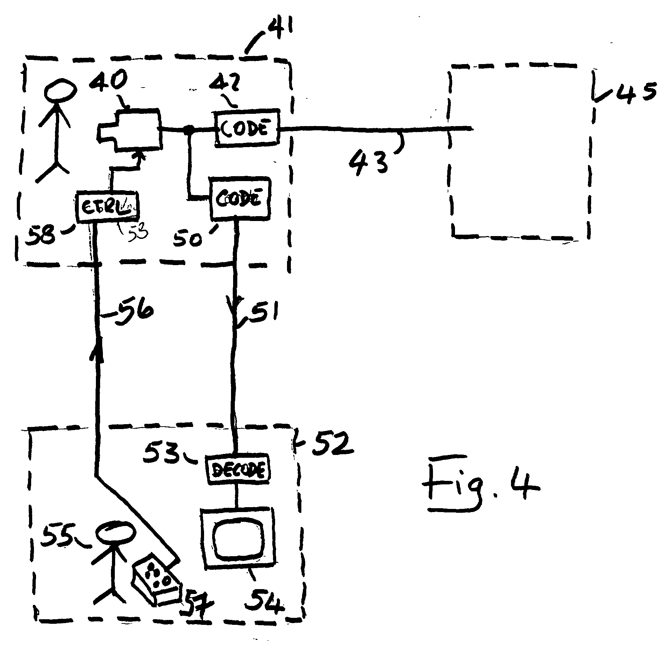

The same underlying idea might be used in other situations too. In a second version of the invention (Figure 4) a camera 40 at a first location 41 has a high-quality (but high delay) coder 42 feeding signals via a transmission link 43 to a further location 45 where the signals may be fed to a monitor for viewing, be broadcast, or be recorded, or otherwise be made use of as desired.

In addition, the first location also has a low-quality, low delay coder 50 which supplies signals via a transmission path 51 to a control location 52 with a corresponding decoder 53 feeding a video monitor 54. The reason for providing the additional, low delay coder is to enable a person 55 to interact with activity at the first location via a communication link 56. One example, of course, is video and audio communication with another person at the first station as already described with reference to Figure 3. In this example, however, the person 55 has a control panel 57 for remote control (via a receiver 58) of camera functions at the first location - e.g. zoom, pan, tilt and so forth and/or control of a video recorder.

Of course the high-quality signals could be routed to the location 52 as well as to the location 45 (or the signals could be routed via 52 to 45).

## Claims

1. A television transmission system comprising:
a first site with a first monitor and a first camera;
a second site, remote from the first, with a second monitor and a second camera;
mixing means for mixing television signals from the first and second sites and forwarding them to a transmitter; and
first coding means for coding television signals from the first and second sites prior to receipt by the transmitter;
wherein each site has a further coder and decoder connected by a link to the further coder and decoder of the other site and connected respectively to receive the output of the site's camera and to feed a decoded output to the site's monitor; and
wherein the further coders and decoders are arranged to operate at a lower quality and lower signal delay than said first coding means.

2. A television transmission system according to claim 1 in which the first coding means comprises a coder located at the first site and a coder located at the second site.

3. A television transmission system according to claim 1 in which the first camera is connected via a coder, transmission link and decoder to the mixer, the second camera is connected via a delay to the mixer, and the first coding means comprises a coder connected between the mixer and the transmitter.

4. A television system comprising:
a) a first station having a camera, a first coder for coding television signals from the camera and a second coder for coding television signals from the camera;
b) a second station having a decoder, a monitor for displaying pictures decoded by the decoder and means for transmitting signals to the first station for interaction therewith;
c) means for conveying signals from the first coder at the first station to the second station; and
d) means for conveying signals from the second coder at the first station to a third station;
wherein the first coder and the decoder are arranged to operate at a lower quality and lower signal delay than is the second coder.

5. A television system according to claim 4 including, at first station, control means for control of the camera in response to signals from the transmitting means at the second station.
